# DEMANDE DE BREVET EUROPEEN

(11) **EP 4 795 921 A1**
(43) Date de publication de la demande: **26.08.2026**
(21) Numéro de dépôt: 26154843.2
(22) Date de dépôt: 28.01.2026
(51) Int. Cl.: A01D 45/06

(54) **ENGIN DE RETOURNAGE D'AU MOINS UN ANDAIN**

(30) Priorité: 21.02.2025 FR 2501806
(71) Demandeur: N.V. Depoortere, 8791 Beveren-Leie (BE)
(72) Inventeur: DEPOORTERE, Rik, 8791 BEVEREN-LEIE (BE)
(74) Mandataire: Cabinet Beau de Loménie

(57) **Abrégé**

L'invention concerne un engin (1) de retournage d'au moins un andain, comprenant : • un module de ramassage (3),
• un module de retournage (5) de l'andain, comportant une courroie croisée à picots avec un brin actif pour le déplacement de l'andain et un brin passif,
• un module d'étalage (7).

L'engin comporte en outre une glissière (30) disposée au moins en partie sous la partie aval du brin actif (26) de la courroie croisée pour le guidage de l'andain vers le module d'étalage, et un dispositif de positionnement (42) engagé avec le partie aval du brin actif, le dispositif de positionnement (42) étant déplaçable par rapport à la glissière (30) entre une position active dans laquelle le dispositif de positionnement agit sur la partie aval du brin actif pour l'aplanir, et une position relâchée dans laquelle le dispositif de positionnement est éloigné de la glissière pour dégager l'espace entre la glissière (30) et le brin actif (26).

## Description

### Domaine Technique

La présente invention concerne un engin de retournage, tracté ou automoteur, pour le retournage de tiges végétales, notamment de lin, se présentant sous la forme d'andains qui sont étalés au sol après le passage de l'arracheuse pour subir l'action du rouissage. La présente invention sera notamment mise en œuvre par les fabricants de matériels agricoles et trouvera son application dans le domaine de l'agriculture.

### Technique antérieure

Le lin est une plante à fibres. Pour faciliter l'extraction des fibres en vue de leur utilisation notamment dans l'industrie textile, les tiges de lin subissent une opération de rouissage. Cette opération nécessite que lors de la récolte du lin, après l'arrachage des tiges, celles-ci soient déposées sur le sol sous la forme d'andains, consistant en une nappe continue de tiges parallèles entre elles et alignées dans le sens perpendiculaire à l'avancement de la machine d'arrachage. L'andain est laissé sur le champ pendant une durée suffisante pour que les microorganismes, présents dans le sol, réalisent la dégradation biologique des ciments pectiques qui lient les fibres entre elles. Lorsque cette dégradation est suffisante, le lin est ramassé en vue d'être teillé c'est-à-dire d'être traité dans un site industriel pour l'extraction des fibres et leur nettoyage en vue de leur utilisation dans l'industrie textile.

La dégradation biologique dépend des conditions d'humidité et d'ensoleillement auxquelles sont soumises les tiges. On comprend que ces conditions peuvent varier selon que la partie de tige est tournée vers le sol ou vers le ciel. C'est pourquoi on procède en cours de rouissage à une opération consistant à retourner l'andain sur le champ.

Cette opération dite de retournage est réalisée par un engin, automoteur ou tracté qui comporte des moyens de ramassage, aptes à prélever l'andain du sol sous forme d'une nappe continue, des moyens de retournage aptes à retourner sur elle-même ladite nappe ramassée et des moyens d'étalage aptes à étaler sur le sol la nappe ainsi retournée.

Un tel engin est par exemple décrit dans le document FR.3.135.186. Dans un tel exemple, les moyens de retournage sont constitués par une courroie munie de picots 25, qui est tendue entre un cylindre avant et un cylindre arrière. Le cylindre avant est associé au pick-up 13 de telle sorte que la nappe 11 prélevée par les doigts du pick-up soit entraînée sur la courroie par les picots. Cette courroie est croisée entre le cylindre avant et le cylindre arrière de sorte que la nappe décrit entre les deux cylindres une demi-spirale au cours de son déplacement de l'avant vers l'arrière. Lorsque les tiges arrivent au niveau du cylindre arrière, elles sont transférées vers des moyens d'étalage comportant une courroie à picots qui est tendue entre un rouleau supérieur et un rouleau inférieur qui est disposé à proximité du sol.

Ainsi, les moyens d'étalage sont positionnés dans la continuité des moyens de retournage, ce qui permet d'obtenir un engin compact, notamment dans le sens de la longueur. Cependant, la compacité rend également l'engin peu adapté au retrait d'éventuels bourrages, et en particulier à ceux pouvant se créer au niveau ou à proximité de la courroie des moyens de retournage qui reste maintenue en tension par le bâti pour pouvoir acheminer correctement les tiges de lin lors de leur retournement.

### Exposé de l'invention

La présente invention vise à résoudre les différents problèmes techniques énoncés précédemment. En particulier, la présente invention vise à proposer un engin configuré pour ramasser, retourner et étaler un andain présent sur le sol, tout en facilitant les opérations de maintenance et/ou de remise en service. Plus précisément, la présente invention vise à proposer un engin facilitant et accélérant les opérations de remise en service après un bourrage des moyens de retournage.

Ainsi, selon un aspect, il est proposé un engin de retournage d'au moins un andain, comprenant :
- un module de ramassage apte à prélever l'andain du sol sous forme d'une nappe continue,
- un module de retournage pour retourner sur elle-même la nappe ramassée, le module de retournage comportant une courroie croisée à picots qui est tendue entre un rouleau avant et un rouleau arrière, la courroie croisée comportant un brin actif pour le déplacement de l'andain et un brin passif, le brin actif présentant une partie amont dans laquelle les picots sont dirigés vers le haut et une partie aval dans laquelle les picots sont dirigés vers le bas,
- un module d'étalage pour étaler la nappe retournée sur le sol, le module d'étalage comportant au moins une courroie à picots, de préférence deux, qui est tendue entre un rouleau supérieur, de préférence coaxial au rouleau arrière, et un rouleau inférieur qui est disposé à proximité du sol ; et
- un bâti portant le module de ramassage, le module de retournage et le module d'étalage,
l'ensemble desdites opérations étant réalisé de manière continue pendant le déplacement de l'engin.

L'engin comporte en outre une glissière disposée au moins en partie sous la partie aval du brin actif de la courroie croisée pour le guidage de l'andain vers le module d'étalage, et un dispositif de positionnement disposé au-dessus de la glissière tout en étant engagé avec le partie aval du brin actif. Le dispositif de positionnement est déplaçable par rapport à la glissière entre une position active dans laquelle le dispositif de positionnement agit sur la partie aval du brin actif pour le maintenir et/ou l'aplanir, et une position relâchée dans laquelle le dispositif de positionnement est éloigné de la glissière pour dégager l'espace entre la glissière et le brin actif.

Ainsi, l'engin selon la présente invention comprend un dispositif de positionnement permettant de maintenir en position, et éventuellement mettre en tension, la courroie d'acheminement des tiges lors du retournage. En particulier, dans la position active, le dispositif de positionnement permet de positionner la partie aval du brin actif de manière à ce qu'elle soit plane, de préférence dans un plan horizontal. Selon l'invention, un tel dispositif de positionnement est également configuré pour avoir, en plus de la position active de positionnement de la courroie, une position relâchée permettant l'éloignement de la courroie par rapport la glissière, et éventuellement de diminuer la tension de la courroie. Par ailleurs, dans la position relâchée, la partie aval du brin actif peut retrouver une orientation oblique par rapport à un plan horizontal, dans la continuité de la partie amont. Le dispositif de positionnement permet notamment un positionnement (proche ou non) par rapport à la glissière, et éventuellement une mise en tension, de la courroie croisée du module de retournage, sans modifier le bâti ou les positions relatives des rouleaux avant et arrière entre lesquels la courroie est montée. Il devient plus aisé, lorsque le dispositif de positionnement est en position relâchée, d'intervenir autour de la courroie, et entre la courroie et la glissière, pour venir désengager et enlever un amas de tiges qui s'y serait coincé. En particulier, un opérateur peut alors retirer plus facilement les tiges, sans avoir à les arracher d'entre la courroie et la glissière. Il est alors possible de réduire la durée et la complexité de l'intervention de l'opérateur pour enlever le bourrage de tiges, sans pour autant complexifier l'engin puisque le positionnement, et éventuellement la tension, de la courroie est ajusté sans modifier la position des rouleaux avant et arrière entre lesquels elle est montée.

Préférentiellement, le dispositif de positionnement comporte un galet engagé avec la partie aval du brin actif de la courroie à picots.

Le galet permet d'agir sur la courroie en venant y exercer une pression. La pression exercée permet de déplacer la courroie pour d'une part la positionner comme souhaitée, c'est-à-dire avec une partie aval du brin actif sensiblement parallèle à un plan horizontal, et d'autre part agir sur sa tension.

Préférentiellement, le galet comporte un support et une roulette montée en rotation au support, le support étant mobile par rapport au bâti de l'engin, la roulette étant engagée avec la partie aval du brin actif de la courroie à picots. La roulette comporte notamment un axe de rotation parallèle à l'axe du rouleau supérieur.

La roulette permet à la fois une mise en tension et un guidage de la courroie. La roulette vient ainsi s'appuyer sur la courroie et tourner à la même vitesse de déplacement de la courroie. Les frottements ou frictions sont ainsi limitées, ce qui ne modifie pas le fonctionnement de la courroie, tout en gardant les fonctions de positionnement et de mise en tension du dispositif de positionnement. De plus, avec un axe de rotation parallèle à l'axe du rouleau supérieur, la surface de contact entre la roulette et la courroie se retrouve sensiblement dans un plan horizontal, ce qui permet, dans la position active, d'aplanir la partie aval du brin actif de la courroie. Par ailleurs, les positions active et relâchée du dispositif de positionnement sont uniquement déterminées par la position du support sur lequel est montée en rotation la roulette.

Préférentiellement, le support est monté pivotant par rapport au bâti autour d'un axe de support.

Pour permettre le passage de la position active à la position relâchée du dispositif de positionnement, celui-ci est monté pivotant autour d'un axe solidaire du support : c'est donc par rotation du dispositif de positionnement que celui-ci passe de la position active à la position relâchée, et inversement. Un tel montage en rotation est avantageux puisqu'il permet notamment un montage du dispositif de positionnement sensiblement dans l'axe de déplacement de la courroie, c'est-à-dire dans une direction sensiblement parallèle à la direction définie par les rouleaux avant et arrière du module de retournage. Il est ainsi possible d'utiliser les portions de bâti situées du côté du rouleau arrière ou du rouleau avant, pour fixer le dispositif de positionnement à l'engin.

Préférentiellement, l'axe de support est parallèle à l'axe du rouleau supérieur.

Comme indiqué précédemment, un montage pivotant du dispositif de positionnement par rapport au bâti permet un montage dans l'axe de déplacement de la courroie, et notamment sur les portions de bâti situées au niveau du rouleau arrière. Dans ce cas, l'axe de support est avantageusement orienté parallèlement à l'axe du rouleau supérieur, c'est-à-dire à l'axe du rouleau arrière. La roulette peut ainsi se déplacer dans une direction sensiblement perpendiculaire à l'axe du rouleau supérieur, notamment selon une direction à la fois perpendiculaire à l'axe du rouleau supérieur et à la direction longitudinale de la courroie croisée définie par les rouleaux avant et arrière. Le déplacement de la roulette selon une telle direction permet ainsi de déformer la géométrie de la courroie croisée, dans l'espace séparant le rouleau avant et arrière, pour la rapprocher de la glissière et la mettre en tension.

Préférentiellement, la roulette comporte des flasques flanquant les bords latéraux de la partie aval du brin actif.

Les flasques permettent notamment de maintenir la courroie en contact avec la surface de la roulette, et d'éviter un glissement de la courroie sur le côté de la roulette. En prévoyant un tel élément de guidage sur le dispositif de positionnement, il devient également possible, dans la position relâchée, de déplacer la courroie par rapport à sa position de fonctionnement standard, pour permettre un retrait de tiges coincées ou bloquées dans le module de retournage. De préférence, les flasques flanquent les bords latéraux du brin actif dans la position active, mais pas dans la position relâchée. Dit autrement, les flasques flanquent les bords latéraux du brin actif uniquement dans la position active.

Préférentiellement, le dispositif de positionnement comporte en outre au moins un actionneur qui est commandable pour déplacer le galet entre la position active et la position relâchée.

Afin de permettre un déplacement du galet de la position active à la position relâchée, et inversement, le dispositif de positionnement peut également comporter un actionneur commandable, permettant de configurer le dispositif de positionnement dans la position voulue à distance : on évite ainsi à l'opérateur intervenant au niveau du module de retournage, d'avoir à effectuer une opération supplémentaire (passage de la position active à la position relâchée du dispositif de positionnement) lors de son intervention, ce qui facilite et accélère le débourrage du module de retournage.

Préférentiellement, le module d'étalage comporte en outre au moins un bras, de préférence deux, notamment parallèles, qui est monté pivotant par rapport au bâti autour d'un axe de pivotement. Le bras porte le rouleau inférieur, lequel est monté au bras de façon rotative, et le bras peut pivoter entre une position de travail et une position déployée de débourrage.

Indépendamment de la position ou de la tension de la courroie croisée du module de retournage, le module d'étalage peut être conçu sous la forme d'un bras monté de manière pivotante sur le bâti au niveau du rouleau supérieur. Ainsi, en permettant un pivotement du bras parallèlement au rouleau supérieur, il devient possible d'accéder à une partie située entre le module de retournage et le module d'étalage. Un tel pivotement peut ne pas modifier la tension des courroies correspondantes lorsque l'axe de pivotement est coaxial avec le rouleau supérieur (lui-même co-axial avec le rouleau arrière) qui n'est pas déplacé : dans ce cas, la distance entre le rouleau supérieur et le rouleau inférieur reste constante lors du pivotement du bras. Alternativement, l'axe de pivotement du bras peut être prévu parallèle mais non-coaxial avec le rouleau supérieur, de manière à permettre un changement de la tension des courroies d'étalage, dans la position déployée du bras. Une telle configuration permet donc d'accéder plus facilement à l'interface entre le module de retournage et le module d'étalage, par exemple pour enlever des tiges coincées ou bloquées dans l'engin.

Préférentiellement, l'axe de pivotement est parallèle, et éventuellement non-coaxial, au rouleau supérieur.

L'axe de pivotement du bras du module d'étalage peut être orienté coaxialement au rouleau supérieur, pour permettre à ce dernier de rester en place lors du pivotement du bras, sans entraîner de modification de la tension de la courroie du module d'étalage, mais également de la courroie de retournage. Alternativement, l'axe de pivotement peut être parallèle mais ne pas être co-axial à celui du rouleau supérieur, de manière à entraîner une diminution de la tension de la courroie du module d'étalage dans la position déployée du bras. Par ailleurs, un tel axe de pivotement permet également d'éloigner la courroie du module d'étalage du reste du bâti de l'engin, et donc de faciliter le retrait d'éventuels bourrages apparaissant entre la courroie du module d'étalage et les parties fixes du bâti. Une telle orientation de l'axe de pivotement est également préférée car elle est sensiblement perpendiculaire à la direction longitudinale du bras, et donc permet de maximiser le déplacement de l'extrémité de celui-ci par rapport au bâti.

Préférentiellement, le bâti comprend en outre un organe de butée contre lequel le bras vient en appui lorsque le bras est en position de travail.

Afin de garantir un positionnement correct du module d'étalage en position de travail, malgré la liberté de rotation du module d'étalage autour de l'axe de pivotement, le bâti comprend une butée sur laquelle le bras du module d'étalage peut venir reposer en position de travail, notamment sous l'effet de son propre poids. Il est alors possible de s'assurer que le bras va rester dans une position de travail déterminée et voulue, pendant les opérations de retournage de l'andain.

Préférentiellement, la glissière comprend une première portion qui s'étend en vis-à-vis de la partie aval du brin actif et une deuxième portion qui s'étend en vis-à-vis de la courroie à picots lorsque le bras est en position de travail.

Afin de faciliter la circulation des tiges entre le retournage et l'étalage, et éviter des blocages voire bourrage à l'interface entre le module de retournage et le module d'étalage, l'engin peut comprendre une glissière continue s'étendant depuis une portion en regard du le brin actif jusqu'à une portion en regard de la courroie du module d'étalage. Les tiges sont alors naturellement amenées (ou guidées) à glisser tout le long de la même surface supérieure de la glissière, pendant les opérations de retournage puis d'étalage.

Préférentiellement, l'actionneur est un vérin qui présente une première extrémité reliée au bras et une seconde extrémité reliée au galet, de sorte que l'actionnement du vérin a pour effet d'amener ensemble le galet en position relâchée et le bras en position déployée de débourrage.

Afin d'agir simultanément sur le module d'étalage et le module de retournage, l'actionneur du dispositif de positionnement peut être monté entre le bras du module d'étalage et le galet. L'écartement, sous l'effet du vérin, du galet et du bras du module d'étalage, permet alors à la fois de faire pivoter le bras par rapport au rouleau supérieur, et d'éloigner le galet de la courroie du module de retournage. En une seule action, qui peut être commandée à distance, il devient ainsi possible d'une part de faciliter l'accès à l'interface entre le module de retournage et le module d'étalage, et d'autre part de donner du mou à la courroie croisée pour permettre d'en dégager les tiges coincées.

Préférentiellement, le bâti comprend en outre un élément de butée, et le galet est en appui contre l'élément de butée lorsque le galet est en position relâchée, par quoi l'actionnement du vérin a pour effet d'amener le galet en position relâchée puis d'amener le bras en position déployée.

Afin d'éviter que l'écartement du galet par rapport au bras ne vienne déplacer que le galet, un élément de butée est prévu sur le bâti de manière à ce que le galet ne puisse pas se déplacer au-delà de la position relâchée. En bloquant ainsi la position relâchée du galet, on contraint le bras du module d'étalage à pivoter à son tour sous l'action du vérin.

Préférentiellement, l'engin comprend en outre un élément de guidage supérieur qui est monté entre le galet tendeur et le bras, l'élément de guidage supérieur étant disposé au-dessus de la glissière et étant monté de façon articulée au galet tendeur, et est monté de façon articulée à une partie supérieure du bras, l'élément de guidage supérieur étant mobile entre une position de guidage dans laquelle l'élément de guidage supérieur s'étend dans la continuité de la partie aval du brin actif et une position ouverte dans laquelle l'élément de guidage est éloigné de la glissière, l'élément de guidage supérieur étant en position de guidage lorsque le dispositif de positionnement est en position active et est en position ouverte lorsque le dispositif de positionnement est en position relâchée

L'élément de guidage supérieur permet de s'assurer que les tiges sont bien dégagées des picots de la courroie de retournage, afin de permettre le passage vers les courroies d'étalage. L'élément de guidage supérieur peut par exemple être formé par deux moyens plats positionnés de part et d'autre de la courroie de retournage. L'élément de guidage supérieur est ainsi monté de manière à venir en position ouverte lorsque le galet est en position relâchée et le bras en position déployée. En particulier, l'actionneur du galet permet de relever à la fois le galet et l'élément de guidage supérieur, puis de déployer le bras des moyens d'étalage, pour permettre de donner accès à l'ensemble des éléments de l'engin à un opérateur.

### Brève description des dessins

[Fig. 1] La figure 1 représente de manière schématique un exemple d'engin avec un module de retournage et un module d'étalage au sol selon l'invention, pendant le retournage d'une nappe de tiges ;
[Fig. 2] La figure 2 représente de manière plus détaillée les modules de retournage et d'étalage au sol de l'engin de la figure 1, lors du retournage des tiges ;
[Fig. 3] La figure 3 représente les modules de retournage et d'étalage au sol de la figure 2, avec le dispositif de positionnement en position active ;
[Fig. 4] La figure 4 représente les modules de retournage et d'étalage au sol de la figure 2, avec le dispositif de positionnement en position relâchée, et
[Fig. 5] La figure 5 représente les modules de retournage et d'étalage au sol de la figure 2, avec le dispositif de positionnement en position relâchée et le bras du moyen d'étalage en position déployée.

### Description des modes de réalisation

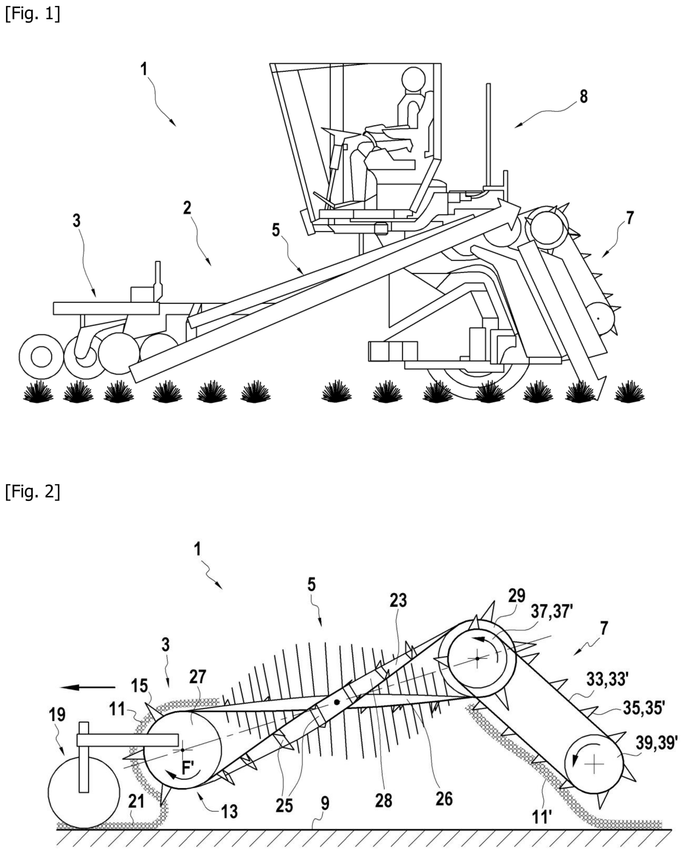

La figure 1 illustre de manière schématique un exemple d'engin 1 avec un système de retournage selon l'invention.

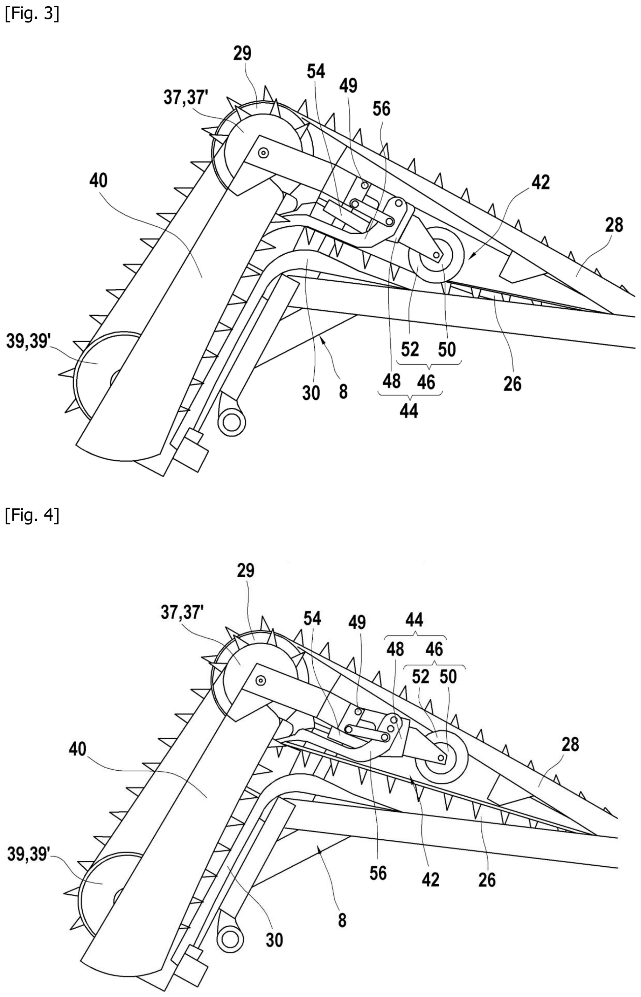

Tel qu'illustré sur les figures 1 et 2, l'engin 1, automoteur ou tracté, comprend un système de retournage 2 avec, successivement, de l'avant vers l'arrière, un module de ramassage 3, un module de retournage 5, et un module d'étalage 7 qui sont montés sur un bâti 8. Le module de ramassage 3 permet de prélever du sol 9 une nappe continue 11 de tiges constituant l'andain. Le module de retournage 5 est apte à retourner sur elle-même ladite nappe continue 11, celle-ci effectuant une demi-spirale depuis son prélèvement à l'avant du module de retournage 5 jusqu'à l'arrière dudit module de retournage. Le module d'étalage 7 est apte à étaler sur le sol 9 la nappe continue retournée 11'. L'ensemble de ces opérations de ramassage, de retournage et d'étalage est réalisé de manière continue pendant le déplacement de l'engin 1. Selon le mode préférentiel illustré, le module de ramassage 3 comportent un pick-up 13 muni de doigts métalliques 15, pouvant être rétractables ou non. Le pick-up 13 tourne sur lui-même dans le sens de la flèche F' contraire au sens de rotation des roues de l'engin 1, de sorte que les doigts métalliques 15, venant en contact avec la nappe continue 11, soulèvent celle-ci et l'entraînent en rotation à la surface comme cela apparaît sur la figure 2. Le pick-up est précédé d'une roue 19 qui lors du déplacement de l'engin 1, vient s'appliquer sur la surface extérieure 21 de la nappe continue 11. Cette roue 19, dont l'axe de rotation est solidaire du pick-up 13, permet de maintenir constant l'écartement entre le pick-up 13 et la nappe continue 11 quelles que soient les irrégularités du sol 9. Selon l'exemple illustré, le module de retournage 5 est constitué par une courroie croisée 23 munie de picots 25, qui est tendue entre un rouleau avant 27 et un rouleau arrière 29. Le rouleau avant 27 est associé au pick-up 13 de telle sorte que la nappe 11 prélevée par les doigts 15 du pick-up soit entraînée sur la courroie croisée 23 par les picots 25. Cette courroie croisée 23 présente un brin actif 26 et un brin passif 28 décrits ci-dessous, et est croisée entre le rouleau avant 27 et le rouleau arrière 29 de sorte que la nappe décrit entre les deux rouleaux une demi-spirale au cours de son déplacement de l'avant vers l'arrière. Se faisant, les tiges initialement disposées au niveau du sol sur le dessus de la nappe se retrouvent en-dessous de celle-ci après le retournement et inversement. On entend par brin actif 26, la partie de la courroie croisée transportant les tiges de lin depuis le rouleau avant 27 jusqu'au rouleau arrière 29 du module de retournage 5. Inversement, le brin passif 28 correspond au retour de la courroie croisée à vide depuis le rouleau arrière 29 jusqu'au rouleau avant 27, les tiges de lin ayant été préalablement transférées vers le module d'étalage 7. Le brin actif 26 présente ainsi, pour permettre le retournement de la nappe lors de son acheminement du rouleau avant vers le rouleau arrière, une partie amont dans laquelle les picots sont dirigés vers le haut et une partie aval dans laquelle les picots sont dirigés vers le bas. Par ailleurs, le module de retournage 5 comporte des éléments mécaniques tels qu'une glissière 30 (voir figure 3), ou des fers de guidage (non représentés), par exemple en demi-spirale, permettant le support de la nappe 11 pendant son retournement, avant et lorsque celle-ci n'est plus supportée par la courroie croisée à picots, c'est-à-dire au niveau des parties amont et aval du brin actif. La glissière est ainsi disposée au moins en partie sous la partie aval du brin actif de la courroie croisée pour le guidage de l'andain vers le module d'étalage. En effet, initialement, la nappe 11 soulevée est entraînée en rotation par les doigts métalliques 15 du pick-up 13, est ensuite transportée et supportée par la courroie croisée 23 jusqu'à ce que ladite nappe 11 se retourne, celle-ci étant alors supportée par la glissière 30, la courroie croisée 23 à picots 25 permettant uniquement le transport de ladite nappe retournée 11' jusqu'à l'arrière du module de retournage 5. Afin de permettre à la fois un maintien de la nappe de tiges par la glissière 30, et un entraînement par la courroie croisée 23, la partie aval du brin actif 26 est positionnée à proximité immédiate de la glissière 30 de manière à venir enserrer les tiges entraînées de la nappe retournée 11'.

Le module d'étalage 7 comprend, de manière préférentielle, un jeu de deux courroies parallèles 33, 33' munies de picots 35, 35'. Chaque courroie 33, 33' est montée tendue entre, respectivement, un rouleau supérieur 37, 37' et un rouleau inférieur 39, 39'. Les rouleaux supérieurs 37, 37' sont disposés dans le même axe que le rouleau arrière 29 du module de retournage 5. Les rouleaux inférieurs 39, 39' sont quant à eux disposés à proximité du sol 9 de manière à ce que la nappe retournée 11', entraînée par les picots 35, 35' qui pénètrent dans la nappe 11', soit étalée sur le sol 9 le plus proche possible de celui-ci de manière à éviter toute perturbation. Le module d'étalage peut notamment comporter un bras 40 (voir figure 3) qui est monté pivotant par rapport au bâti 8 autour d'un axe de pivotement, et qui porte chaque rouleau inférieur 39, 39' monté de manière rotative sur le bras 40. En particulier, le bras 40 est configuré pour pivoter autour de l'axe de pivotement, entre une position de travail et une position déployée de débourrage. L'axe de pivotement est avantageusement co-axial avec l'axe de rotation des rouleaux supérieurs 37, 37'. Par ailleurs, le bâti 8 peut également comprendre une butée sur laquelle vient s'appuyer le bras 40 en position de travail. Tout comme le module de retournage 5, le module d'étalage 7 comporte également un élément mécanique tel qu'une glissière, des fers de guidage (non représentés) ou une plaque (non représentée), permettant le support de la nappe retournée 11' lors de son transfert des rouleaux supérieurs 37, 37' jusqu'aux rouleaux inférieurs 39, 39'. Par exemple, et telle qu'illustrée sur les figures 3 à 5, la glissière 30 du module de retournage 5 peut comprendre une première portion qui s'étend en vis-à-vis de la partie aval du brin actif 26 (voir figure 3) et une deuxième portion qui s'étend en vis-à-vis des courroies à picots 33, 33' lorsque le bras 40 est en position de travail (voir figure 4).

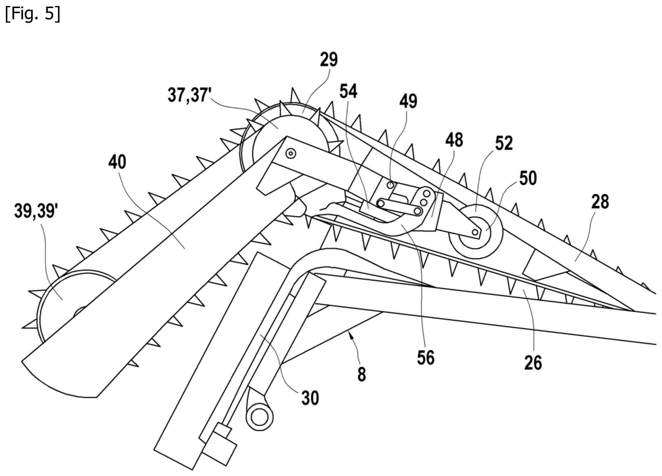

L'engin 1 comporte également, selon la présente invention, un dispositif de positionnement 42 configuré pour positionner et éventuellement mettre en tension la partie aval du brin actif 26 de la courroie croisée 23. Plus précisément, afin d'avoir une partie aval du brin actif 26 positionnée au plus de près de la glissière 30, le dispositif de positionnement 42 vient guider et éventuellement exercer une pression sur la ladite partie aval du brin actif 26. Dans le même temps, le dispositif de positionnement 42 est également configuré pour donner du mou à la courroie croisée, notamment lorsqu'il est nécessaire d'intervenir sur le module de retournage, par exemple lors d'un bourrage. Le dispositif de positionnement 42 est ainsi positionné au-dessus de la glissière 30, et comprend deux positions selon le fonctionnement de l'engin : une position active illustrée à la figure 3, et une position relâchée illustrée aux figures 4 et 5.

Dans la position active, le dispositif de positionnement 42 vient exercer une force sur la courroie croisée 23 afin de positionner la partie aval du brin actif 26 près de la glissière 30. On assure alors un maintien et un entraînement adéquat de la nappe retournée 11' jusqu'au module d'étalage 7.

Dans la position relâchée, le dispositif de positionnement 42 est éloigné de la glissière 30, en le relevant, afin de ne plus exercer de pression sur la partie aval du brin actif 26, et permettre à la courroie croisée 23 de pouvoir être éloignée de la glissière 30. Une telle configuration est notamment particulièrement avantageuse pour permettre d'agir sur un bourrage, lorsque les tiges de la nappe viennent s'enchevêtrer et se superposer dans l'espace délimité par la courroie croisée 23 et la glissière 30. Grâce à la position relâchée, un opérateur peut alors plus facilement éloigner la courroie croisée 23 de la glissière 30, et donc desserrer les tiges positionnées entre les deux pour les enlever.

Afin d'exercer la pression sur la partie aval du brin actif 26 et venir le déformer en direction de la glissière 30, le dispositif de positionnement 42 peut comprendre, tel qu'illustré sur les figures 3 à 5, un galet 44 formé par une roulette 46 venant en contact, dans la position active, avec la courroie croisée 23, et un support 48 sur lequel est monté la roulette 46. La roulette 46, formée par une roue 50 reliée, via son axe de rotation, au support 48, et deux flasques 52 flanquant les bords latéraux de la roue 50 et de la partie aval du brin actif 26. Les flasques 52 flanquent surtout les bords latéraux du brin actif 26 dans la position active. La roulette 46 est positionnée de manière à ce que l'axe de rotation de la roue soit perpendiculaire à la direction d'entraînement de la nappe de tiges, c'est-à-dire parallèle à l'axe de rotation des rouleaux avant et arrière 27, 29. La roue 50 est alors orientée de manière à tourner avec la courroie croisée 23 pendant la phase de retournage de la nappe de tiges.

Par ailleurs, grâce aux deux flasques 52 flanquant les bords latéraux de la partie aval du brin actif 26, la roulette 46 permet à la fois d'appliquer une pression sur la courroie croisée 23 pour aplanir la partie aval, et de la guider dans la direction longitudinale.

Le support 48 est monté mobile sur le bâti 8. Plus précisément, c'est le déplacement du support 48 qui permet de positionner la roulette 46 en contact avec la courroie croisée (position active), ou à distance de la courroie croisée (position relâchée). Le support 48 peut ainsi être fixé au bâti par une liaison pivot dont l'axe de support 49 est parallèle à celui de rotation de la roulette 46, c'est-à-dire parallèle aux axes de rotation des rouleaux avant 27 et arrière 29 entraînant la courroie croisée 23. La rotation du support 48 autour de sa liaison pivot permet donc de modifier la distance entre la roulette 46 et la partie aval du brin actif 26.

Afin de commander le déplacement du galet 44, en l'occurrence via le support 48, le dispositif de positionnement 42 comprend également un actionneur, par exemple un vérin 54 positionné de manière pouvoir faire pivoter le support 48 autour de sa liaison pivot. Ainsi, le support 48 peut présenter une forme coudée avec une première portion sur laquelle est montée la roulette 46, et une deuxième portion reliant une extrémité de la première portion au bâti 8. Dans une telle configuration, le vérin 54 est avantageusement monté à la deuxième extrémité de la première portion, ce qui permet d'orienter l'axe du vérin 54 sensiblement parallèlement à la direction de la deuxième portion du support 48. On obtient ainsi un dispositif de positionnement 42 compact, pouvant être positionné selon la direction longitudinale de la courroie croisée 23, entre le brin actif 26 et le brin passif 28. L'allongement ou le rétrécissement du vérin 54 permet alors de changer la position du galet 44, et plus particulièrement de la roulette 46, par rapport à la partie aval du brin actif 26 : il devient donc possible, par commande du vérin 54, de placer le dispositif de positionnement 42 dans sa position active ou bien dans sa position relâchée.

L'actionneur du dispositif de positionnement 42 peut être monté, à sa deuxième extrémité, sur le bâti 8. Alternativement, et comme illustré sur les figures 3 à 5, la deuxième extrémité de l'actionneur peut être monté sur le bras 40 du module d'étalage 7, à distance de l'axe de rotation dudit bras 40 par rapport au bâti 8. Ainsi, lors de l'actionnement du vérin 54, il devient possible d'agir à la fois sur le galet 44 et sur le bras 40. Plus précisément, compte tenu du poids respectif du galet 44 et du bras 40, l'allongement du vérin 54 va d'abord entraîner le pivotement du galet 44 vers la position relâchée (éloignement de la roulette 46 de la courroie croisée 23), tel que cela est illustré sur la figure 4. Une fois le galet 44 dans la position relâchée, une butée (non représentée), par exemple solidaire du bâti, vient bloquer le pivotement du galet 44 : l'allongement du vérin 54 va alors conduire au déplacement du bras 40 qui va pivoter depuis la position de travail jusqu'à la position déployée, tel que cela est représenté sur la figure 5. Ainsi, avec un même actionneur, il est possible de pivoter à la fois le galet 44 et le bras 40, pour permettre un accès facilité à la fois au module d'étalage 7 et au module de retournage 5. Une fois les opérations réalisées, il suffit alors de commander l'actionneur dans le sens opposé : le rétrécissement du vérin 54 va, dans un premier temps, conduire à repositionner le bras 40 en position de travail, sur une butée du bâti 8, puis, dans un second temps, conduite à positionner le galet 44 dans la position active dans laquelle il vient en appui sur la partie aval du brin actif 26 (figure 3).

L'engin 1 peut enfin comporter un élément de guidage supérieur 56. L'élément de guidage supérieur 56 permet notamment de guider la nappe de tiges depuis la courroie croisée du module de retournage 5, jusqu'à la courroie du module d'étalage 7.

L'élément de guidage supérieur 56 est disposé au-dessus de la glissière 40, et est mobile entre une position de guidage dans laquelle il s'étend dans la continuité de la partie aval du brin actif 26, et une position ouverte dans laquelle l'élément de guidage supérieur 56 est éloigné de la glissière 30. L'élément de guidage supérieur 56 est notamment en position de guidage lorsque le dispositif de positionnement 42 est en position active, et est en position ouverte lorsque le dispositif de positionnement 42 est en position relâchée. L'élément de guidage supérieur 56 peut notamment flanquer les bords latéraux de la partie aval du brin actif 26 en position de guidage (figure 3), et être positionné au-dessus de la partie aval du brin actif 26 dans la position ouverte (figures 4 et 5).

Ainsi, grâce au dispositif de déplacement selon l'invention, il devient plus aisé, et donc plus rapide, d'intervenir directement sur le module de retournage, et éventuellement aussi sur le module d'étalage, pour y faire des opérations de maintenance ou pour décoincer des éléments qui seraient bloqués entre la courroie croisée et la glissière notamment.

## Revendications

1. Engin (1) de retournage d'au moins un andain, comprenant :
• un module de ramassage (3) apte à prélever l'andain du sol sous forme d'une nappe continue,
• un module de retournage (5) pour retourner sur elle-même la nappe ramassée, le module de retournage comportant une courroie croisée (23) à picots qui est tendue entre un rouleau avant (27) et un rouleau arrière (29), la courroie croisée (23) comportant un brin actif (26) pour le déplacement de l'andain et un brin passif (28), le brin actif présentant une partie amont dans laquelle les picots (25) sont dirigés vers le haut et une partie aval dans laquelle les picots (25) sont dirigés vers le bas,
• un module d'étalage (7) pour étaler la nappe retournée sur le sol (9), l'ensemble desdites opérations étant réalisé de manière continue pendant le déplacement de l'engin (1), le module d'étalage (7) comportant au moins une courroie à picots (33, 33'), de préférence deux, qui est tendue entre un rouleau supérieur (37, 37'), de préférence coaxial au rouleau arrière, et un rouleau inférieur (39, 39') qui est disposé à proximité du sol ;
• un bâti (8) portant le module de ramassage (3), le module de retournage (5) et le module d'étalage (7),
**caractérisé en ce qu'**il comporte en outre une glissière (30) disposée au moins en partie sous la partie aval du brin actif de la courroie croisée pour le guidage de l'andain vers le module d'étalage (7), et un dispositif de positionnement (42) disposé au-dessus de la glissière tout en étant engagé avec le partie aval du brin actif, le dispositif de positionnement étant déplaçable par rapport à la glissière (30) entre une position active dans laquelle le dispositif de positionnement agit sur la partie aval du brin actif pour l'aplanir, et une position relâchée dans laquelle le dispositif de positionnement est éloigné de la glissière (30) pour dégager l'espace entre la glissière et le brin actif (26).

2. Engin (1) de retournage selon la revendication 1, dans lequel le dispositif de positionnement (42) comporte un galet (44) engagé avec la partie aval du brin actif (26) de la courroie à picots.

3. Engin (1) de retournage selon la revendication 2, dans lequel le galet (44) comporte un support (48) et une roulette (46) montée en rotation au support, le support (48) étant mobile par rapport au bâti (8) de l'engin, la roulette (46) étant engagée avec la partie aval du brin actif (26) de la courroie croisée.

4. Engin (1) de retournage selon la revendication 3, dans lequel le support (48) est monté pivotant par rapport au bâti (8) autour d'un axe de support (49).

5. Engin (1) de retournage selon la revendication 4, dans lequel l'axe de support (49) est parallèle à l'axe du rouleau supérieur (29).

6. Engin (1) de retournage selon l'une quelconque des revendications 3 à 5, dans lequel la roulette (46) comporte des flasques (52) flanquant les bords latéraux de la partie aval du brin actif (26).

7. Engin (1) de retournage selon l'une quelconque des revendications 2 à 6, dans lequel le dispositif de positionnement (42) comporte en outre au moins un actionneur qui est commandable pour déplacer le galet (44) entre la position active et la position relâchée.

8. Engin (1) de retournage selon l'une quelconque des revendications précédentes, dans lequel le module d'étalage (7) comporte en outre au moins un bras (40), de préférence deux, notamment parallèles, qui est monté pivotant par rapport au bâti (8) autour d'un axe de pivotement, le bras portant le rouleau inférieur (39, 39'), lequel est monté au bras de façon rotative, le bras (40) pouvant pivoter entre une position de travail et une position déployée de débourrage.

9. Engin (1) de retournage selon la revendication 8, dans lequel l'axe de pivotement est parallèle, et éventuellement non-coaxial, au rouleau supérieur (37, 37').

10. Engin (1) de retournage selon la revendication 8 ou 9, dans lequel le bâti (8) comprend en outre un organe de butée contre lequel le bras (40) vient en appui lorsque le bras (40) est en position de travail.

11. Engin (1) de retournage selon l'une quelconque des revendications 8 à 10, dans lequel la glissière (30) comprend une première portion qui s'étend en vis-à-vis de la partie aval du brin actif (26) et une deuxième portion qui s'étend en vis-à-vis de la courroie à picots (33, 33') lorsque le bras (40) est en position de travail.

12. Engin (1) de retournage selon la revendication 7, en combinaison avec l'une quelconque des revendication 8 à 11, dans lequel l'actionneur est un vérin (54) qui présente une première extrémité reliée au bras (40) et une seconde extrémité reliée au galet (44), de sorte que l'actionnement du vérin (54) a pour effet d'amener ensemble le galet (44) en position relâchée et le bras (40) en position déployée de débourrage.

13. Engin (1) de retournage selon la revendication 12, dans lequel le bâti (8) comprend en outre un élément de butée, et dans lequel le galet (44) est en appui contre l'élément de butée lorsque le galet est en position relâchée, par quoi l'actionnement du vérin (54) a pour effet d'amener le galet en position relâchée puis d'amener le bras (40) en position déployée.

14. Engin (1) de retournage selon l'une quelconque des revendications 12 ou 13, comprenant en outre un élément de guidage supérieur (56) qui est monté entre le galet tendeur (44) et le bras (40), l'élément de guidage supérieur (56) est disposé au-dessus de la glissière (30) et est monté de façon articulée au galet tendeur, et est monté de façon articulée à une partie supérieure du bras (40), l'élément de guidage supérieur (56) étant mobile entre une position de guidage dans laquelle l'élément de guidage supérieur s'étend dans la continuité de la partie aval du brin actif (26) et une position ouverte dans laquelle l'élément de guidage est éloigné de la glissière (30) , l'élément de guidage supérieur étant en position de guidage lorsque le dispositif de positionnement (42) est en position active et est en position ouverte lorsque le dispositif de positionnement (42) est en position relâchée.
